# EUROPEAN PATENT APPLICATION

(11) **EP 1 369 760 A1**
(43) Date of publication of application: **10.12.2003**
(21) Application number: 02712388.4
(22) Date of filing: 15.02.2002
(51) Int. Cl.: G05B 19/418, B23Q 41/00

(54) **UNIQUE NUMBER RECORDING SYSTEM**

(30) Priority: 16.02.2001 JP 2001039747
(71) Applicant: Sony Disc Technology Inc., Tokyo 141-0001 (JP)
(72) Inventor: FUJITA, Shinichi, c/o SONY DISC TECHNOLOGY INC., Tokyo 141- 0001 (JP)
(74) Representative: Thévenet, Jean-Bruno
(86) International application number: JP0201302
(87) International publication number: WO02065222

(57) **Abstract**

The present invention relates to a unique-number recording system which allows not-overlapping unique numbers to be generated. A unique-number acquisition section 120 of a unique-number recording apparatus 100a requests unique-number information, as required, from a unique-number management server 200 through a communication section 110. The unique-number management server 200 acquires the request from the unique-number recording apparatus 100a. A unique-number generation section 220 calculates unique numbers to be assigned to optical disks 300 according to history information stored in a history-information storage section 230 to generate unique-number information, sends it to the unique-number recording apparatus 100a, and updates the history information. The unique-number acquisition section 120 of the unique-number recording apparatus 100a acquires the unique-number information, and sends it to a unique-number recording section 130. The unique-number recording section 130 records certain unique numbers in the optical disks 300 according to the unique-number information. The present invention can be applied to an apparatus for manufacturing optical disks.

## Description

### Technical Field

The present invention relates to unique-number recording systems, and more particularly, to a unique-number recording system for recording unique numbers which make certain products identifiable, when the products are manufactured.

### Background Art

Conventionally, to each product manufactured in a production factory, an identification number (ID number) unique to the product is assigned. The ID number is recorded on the product, for example, by attaching printed matter on which the ID number has been recorded, at a predetermined position of the product. The assigned ID number is used for product management and others. Such an ID number is generally divided into and formed of information which allows the product to be identified and others, such as a production factory, a lot number, or a manufacturing date.

When a product includes a memory, an ID number may be recorded in the memory. The ID number recorded in the memory is read, as required, to be used as management information. When an ID number is printed on a label, if the label is peeled off or gets dirty, the ID number cannot be read. In contrast, when an ID number is recorded in a memory, however, such an inconvenience does not occur. In addition, a process for attaching a label is not required. Although an optical disk, such as a CD (compact disk), an MD (Mini disk) or a DVD (digital versatile disk), has a storage area, there is no current system which records an ID number in that storage area when the optical disk is manufactured.

However, as for conventional ID numbers, it is difficult to assign a unique, not overlapping, number to each product manufactured.

Products are generally manufactured in a plurality of lines, and in addition, in a plurality of production factories at the same time in many cases. Since a manufacturing apparatus provided for each line is independently installed, different ID numbers need to be specified for each manufacturing apparatus. In addition, since each production factory operates independently, common serial numbers cannot be assigned to all products. Therefore, to assign ID numbers to products, it is necessary that the field of each ID number be divided into some subfields and each sub-field indicate identification information such as a manufacturing-source production factory, a manufacturing-apparatus number (line number) and a lot number.

Because ID numbers assigned in this way are dependent on production factories and manufacturing apparatuses, however, it is not easy to manage the ID numbers of all products. Since it is possible that many products have the same numbers except for only the ID numbers assigned to manufacturing-source production factories, searching becomes troublesome and management processing becomes complicated. In addition, since information identifying a unique-number recording apparatus and a top lot number are manually specified, the same ID numbers may be assigned due to an erroneous operation.

As described above, in a conventional manufacturing system in which each unique-number recording apparatus operates independently, it cannot be assured that a unique, not overlapping, number is assigned. In addition, management of assigned ID numbers becomes complicated.

Management is an important issue especially for optical disks because they are manufactured in a huge amount.

As is generally known, optical disks have been widely used in these years as recording media not only for recording musical data and video data but also for recording game program data, various application programs, and data because of easy handling and a large storage capacity. Optical disks which have recorded various programs and data in advance in this way is called ROM (read-only disk) type optical disks. The ROM-type optical disks have been used for wide purposes and there are a huge number of titles. A vast amount of optical disks are manufactured in cases such as that in which several millions of optical disks are manufactured for one popular musical-data or popular game-software title.

As such ROM-type optical disks have been spread, an unauthorized use of software, unauthorized copying, and pirated versions have increased to infringe the right of copyright holders. This is because unique ID numbers cannot be individually assigned to ROM-type optical disks, and a manufacturing apparatus of ROM-type disks becomes easy to acquire and provides an easy operation.

In these days, match-type network games in which game units to which CD ROMs which have stored a game program and data are loaded are connected through a network and users make a match have been spread in these days. In such a network game, to identify the users, a method for assigning unique ID numbers to CD-ROMs to identify the users has been proposed, because, in a method in which individual information is input to register the operator of a game unit, inputting information is troublesome and operators having the same input information may appear.

As described above, as an ID number assigned to each product, a unique number easier to manage has been demanded, such as a serial number assigned to each product, not a number assigned depending on production, including a production factory and a lot number. Especially for optical disks, easy-to-manage, not-overlapping, unique numbers have been demanded as described above to make management easy or to use the optical disks for various usage.

### Disclosure of Invention

The present invention has been made in consideration of the above points. It is an object of the present invention to provide a unique-number recording system for recording not-overlapping, unique numbers in certain products and a unique-number recording method therefor. In addition, another object of the present invention is to provide a unique-number management apparatus which generates not-overlapping, unique numbers.

To solve the foregoing problems, the present invention provides a unique-number recording system for recording unique numbers which make certain products identifiable, characterized by including a unique-number recording apparatus including communication means for transmitting and receiving unique-number information formed of the unique numbers and information related to the unique numbers, through a communication line; unique-number acquisition means for acquiring the unique-number information as required; and unique-number recording means for recording certain unique numbers in the products according to the unique-number information acquired by the unique-number acquisition means, and a unique-number management apparatus including communication means for transmitting and receiving the unique-number information to and from the unique-number recording apparatus through the communication line; history-information storage means for storing history information related to unique numbers assigned to the products; and unique-number generation means for calculating unique numbers to be assigned to the products according to the history information to generate the unique-number information and for updating the history information, in response to a request from the unique-number recording apparatus or as required.

In a unique-number recording system having such a structure, a unique-number recording apparatus acquires unique-number information formed of unique numbers to be recorded in products and information related to the unique numbers from a unique-number management apparatus. A unique-number acquisition means of the unique-number recording apparatus requests unique-number information from the unique-number management apparatus as required through communication means. The unique-number management apparatus stores in advance history information related to unique numbers assigned to the products in history-information storage means. Unique-number generation means of the unique-number management apparatus calculates unique numbers to be assigned to the products according to the history information stored in the history-information storage means to generate unique-number information, and sends it to the unique-number recording apparatus through communication means when accepting a request for acquiring unique-number information through the communication means, or as required. In response to this operation, the history information stored in the history-information storage means is updated. The unique-number acquisition means of the unique-number recording apparatus acquires the unique-number information through the communication means, and sends it to unique-number recording means. The unique-number recording means records certain unique numbers in the products according to the unique-number information acquired by the unique-number acquisition means.

To solve the foregoing problems, the present invention provides a unique-number recording system for recording unique numbers which make certain products identifiable, characterized by including a unique-number recording apparatus including communication means for transmitting and receiving unique-number information formed of the unique numbers and information related to the unique numbers; unique-number acquisition means for acquiring the unique-number information as required; and unique-number recording means for recording certain unique numbers in the products according to the unique-number information acquired by the unique-number acquisition means; a unique-number storage apparatus including history-information storage means for storing history information related to unique numbers assigned to the products; communication means for transmitting and receiving the history information; and history-information management means for managing information stored in the history-information storage means and for controlling transmission and receiving of the history information; and a unique-number management apparatus including first communication means for transmitting and receiving the unique-number information to and from the unique-number recording apparatus; second communication means for transmitting and receiving the history information to and from the unique-number storage apparatus; and unique-number generation means for acquiring the history information from the unique-number storage apparatus, for calculating unique numbers to be assigned to the products according to the history information to generate the unique-number information, and for updating the history information, in response to a request from the unique-number recording apparatus or as required.

In a unique-number recording system having such a structure, a unique-number storage apparatus stores history information related to unique numbers assigned to products in history-information storage means. The history information is managed by history-information management means. Unique-number acquisition means of a unique-number recording apparatus requests unique-number information from a unique-number management apparatus through communication means as required. Unique-number generation means of the unique-number management apparatus acquires the history information from the unique-number storage apparatus through second communication means when accepting the request through first communication means. Then, the unique-number generation means calculates unique numbers to be assigned to the products according to the acquired history information to generate unique-number information, and requests a history-information update from the unique-number storage apparatus. Further, the unique-number generation means sends the unique-number information to the unique-number recording apparatus. The history-information management means of the unique-number storage apparatus updates the history information stored in the history-information storage means through the first communication means when accepting the update request for the history information through the communication means. The unique-number acquisition means of the unique-number recording apparatus acquires the unique-number information through the communication means, and the unique-number recording means records unique numbers in the products.

To solve the foregoing problems, a unique-number management apparatus for managing unique numbers which make certain products identifiable is provided, characterized by including communication means for transmitting and receiving unique-number information formed of the unique numbers and information related to the unique numbers to and from a unique-number recording apparatus for recording the unique numbers in the products, through a communication line; history-information storage means for storing history information related to unique numbers assigned to the products; and unique-number generation means for calculating unique numbers to be assigned to the products according to the history information to generate the unique-number information and for updating the history information, in response to a request from the unique-number recording apparatus or as required.

In a unique-number management apparatus having such a structure, history-information storage means stores in advance history information related to unique numbers assigned to products. In response to a request from a unique-number recording apparatus for recording unique numbers in certain products, or as required, unique-number generation means calculates unique numbers to be assigned to certain products according to the history information to generate unique-number information and sends it to the unique-number recording apparatus through communication means. In response to this operation, the history information stored in the history-information storage means is updated.

To solve the foregoing problems, a unique-number recording method for recording, when certain products are manufactured, unique numbers which make the products identifiable is provided, characterized by including a storage step in which a unique-number management apparatus for managing the unique numbers stores history information related to the unique numbers assigned to the products in advance; a generation step of calculating unique numbers to be assigned to the products according to the history information to generate the unique-number information, in response to a request from a unique-number recording apparatus for recording the unique numbers in the products, or as required; an update step of sending the unique-number information to the unique-number recording apparatus and of updating the history information; and a recording step in which the unique-number recording apparatus acquires the unique-number information, and records certain unique numbers to the products according to the unique-number information.

In a unique-number recording method having such a procedure, a unique-number management apparatus for managing unique numbers stores in advance history information related to unique numbers assigned to products. In response to a request from a unique-number recording apparatus for recording unique numbers in the products, or as required, the unique-number management apparatus calculates unique numbers to be assigned to the products according to the history information, generates unique-number information from the calculated unique numbers, and sends the unique-number information to the unique-number recording apparatus. Then, the unique-number management apparatus updates the history information. When the unique-number recording apparatus acquires the unique-number information, the unique-number recording apparatus records certain unique numbers in the products according to the acquired unique-number information.

### Brief Description of the Drawings

Fig. 1 is a structural view of a unique-number recording system according to a first embodiment of the present invention.
Fig. 2 is a structural view of a unique-number recording system according to a second embodiment of the present invention.
Fig. 3 is a structural view of a unique-number recording system which operates in a plurality of factories, according to an embodiment of the present invention.
Fig. 4 is a flowchart of a unique-number recording method according to an embodiment of the present invention.

### Best Mode for Carrying Out the Invention

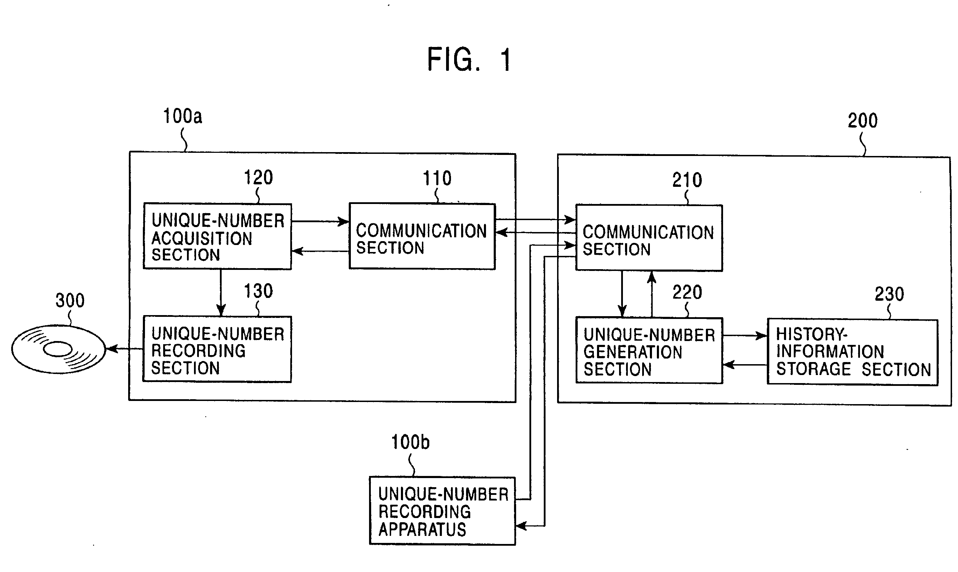

Embodiments of the present invention will be described below by referring to the drawings. First, an optical-disk manufacturing system serving as a unique-number recording system having a structure in which a unique-number management apparatus manages a plurality of unique-number recording apparatuses, according to a first embodiment, will be described. Fig. 1 is a structural view of a unique-number recording system according to the first embodiment of the present invention, applied to optical-disk manufacturing.

In the unique-number recording system according to the present invention, unique-number recording apparatuses 100a and 100b for recording unique numbers in optical disks are connected to a unique-number management server 200 serving as a unique-number management apparatus for managing unique numbers, through communication lines.

The unique-number recording apparatus 100a is formed of a communication section 110 for communicating with the unique-number management server 200, a unique-number acquisition section 120 for acquiring unique-number information from the unique-number management server 200, and a unique-number recording section 130 for recording a certain unique number in an optical disk 300 according to the unique-number information.

The communication section 110 is connected to a communication section 210 of the unique-number management server 200 through a communication line, such as a leased line, including Ethernet, or a public line, and transmits and receives unique-number information formed of a unique number and information related to the unique number. For example, in response to a request from the unique-number acquisition section 120, the communication section 110 requests a unique number to be assigned to the optical disk 300 from the unique-number management server 200. The communication 110 also receives a reply from the unique-number management server 200, and sends it to the unique-number acquisition section 120.

When manufacturing the optical disk 300 starts, or in other occasions, the unique-number acquisition section 120 acquires unique-number information from the unique-number management server 200, as required. A request for unique-number information is made through the communication section 110. The unique-number acquisition section 120 acquires a response from the unique-number management server 200 through the communication section 110, and checks the response. When the unique-number acquisition section 120 has acquired unique-number information with a normal response, the unique-number acquisition section 120 sends it to the unique-number recording section 130. When the unique-number acquisition section 120 could not acquire unique-number information with a failure response, the unique-number acquisition section 120 again sends a request for unique-number information through the communication section 110. An acquisition process for unique-number information is finished when the unique-number information has been acquired, or when a request has been made a predetermined number of times.

The unique-number recording section 130 records a unique number in the optical disk 300 according to the unique-number information acquired by the unique-number acquisition section 120. When the unique-number information allows a range of numbers, for example, from 1,000 to 1,100, to be recorded, the numbers from 1,000 to 1,100 are sequentially recorded in the optical disks 300.

Since the unique-number recording apparatus 100b has the same structure as the unique-number recording apparatus 100a, a description thereof is omitted.

The unique-number management server 200 is formed of the communication section 210 for communicating with the unique-number recording apparatuses 100a and 100b, a unique-number generation section 220 for generating a unique number, and a history-information storage section 230 for recording the history information of a unique number assigned to a product.

The communication section 210 is connected to the unique-number recording apparatuses 100a and 100b through communication lines, such as leased lines, including Ethernet, or public lines, and transmits and receives unique-number information formed of a unique number and information related to the unique number.

When the unique-number generation section 220 receives a request for unique-number information from the unique-number recording apparatus 100a or 100b through the communication section 210, the unique-number generation section 220 references history information related to unique numbers, stored in the history-information storage section 230 to search for a unique number not yet used, and calculates a unique number which can be assigned. A unique number is formed of a combination of any letter, numeral, and symbol. According to the calculated unique number, unique-number information is generated and sent to the unique-number recording apparatus 100a or 100b through the communication section 210. Unique-number information to be sent to the unique-number recording apparatus 100a or 100b can specify a range of unique numbers which can be assigned or can assign a unique number to each optical disk 300.

The history-information storage section 230 stores history information related to unique numbers assigned to products through the unique-number recording apparatuses 100a and 100b. The operation of the system used for optical-disk manufacturing, having the above structure, and a unique-number recording method will be described.

The unique-number acquisition section 120 of the unique-number recording apparatus 100a or 100b requests unique-number information from the unique-number management server 200 through the communication section 110 when the optical disk 300 is manufactured. A request is made at a certain timing determined in advance, such as for each lot or for each optical disk 300. The unique-number management server 200 receives the request for unique-number information at the communication section 210, and sends it to the unique-number generation section 220. The unique-number generation section 220 reads the history information of unique numbers assigned in the past from the history-information storage section 230 to search for a number not used in the past, and determines a range of numbers which can be used, according to a rule determined in advance. When serial unique numbers are assigned in the order of requests, for example, the lowest unique number is assigned first among the unique numbers not yet used. Unique-number information is generated according to the determination and sent to the unique-number recording apparatus 100a or 100b through the communication section 210, and the history information stored in the history-information storage section 230 is also updated. When the unique-number acquisition section 120 acquires the unique-number information through the communication section 110, it sends the information to the unique-number recording section 130. The unique-number recording section 130 records a unique number in the optical disk 300 according to the unique-number information.

As described above, since the unique-number management server 200 manages unique numbers and determines a unique number to be recorded in the optical disk 300, unique numbers do not overlap. In addition, when a request is made, the lowest unique number is assigned. Therefore, serial unique numbers can be assigned to the optical disks 300 managed by the unique-number recording apparatuses 100a and 100b.

In the above description, the unique-number recording system records unique numbers in optical disks. The system can also be used for a system which manufactures other products.

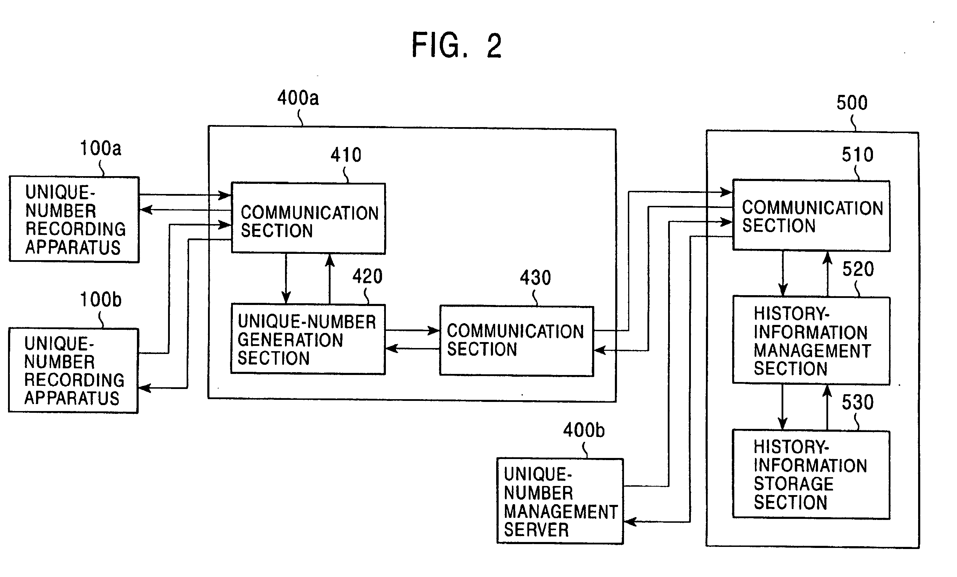

A unique-number recording system used for optical-disk manufacturing, having a structure in which a unique-number recording apparatus for managing the history information of unique numbers is provided separately from a unique-number management apparatus, according to a second embodiment will be described next. Fig. 2 is a structural view of the unique-number recording system according to the second embodiment of the present invention. The same numbers as those used in Fig. 1 are assigned to the same sections as those shown in Fig. 1, and a description thereof is omitted.

An optical disk manufacturing system according to the present invention is formed of a unique-number management server 400a for managing unique numbers for unique-number recording apparatuses 100a and 100b, a unique-number management server 400b having the same structure as the unique-number management server 400a, and a unique-number data base 500 serving as a unique-number storage apparatus for managing the history information of unique numbers.

The unique-number management server 400a is formed of a communication section 410 for communicating with the unique-number recording apparatuses 100a and 100b, a unique-number generation section 420 for calculating a unique number assigned to an optical disk 300, and a communication section 430 for communicating with the unique-number data base 500.

The communication section 410 is connected to the unique-number recording apparatuses 100a and 100b through communication lines, such as leased lines, including Ethernet, or public lines, and transmits and receives unique-number information.

When the unique-number generation section 420 receives a request for unique-number information from the unique-number recording apparatus 100a or 100b through the communication section 410, the unique-number generation section 420 requests history information from the unique-number data base 500 through the communication section 430. When the unique-number generation section 420 receives the history information, it references the history information to search for a unique number not yet used, calculates a unique number which can be assigned, and generates unique-number information. The unique-number generation section 420 requests a history-information update from the unique-number data base 500 through the communication section 430 so as to update the history information according to a unique number to be assigned. When the update request is accepted, the unique-number generation section 420 sends the unique-number information to the unique-number recording apparatus 100a or 100b. When the update request is denied, processes are repeated from the process for obtaining history information.

The communication section 430 is connected to the unique-number data base 500 through a communication line, such as a leased line, including Ethernet, or a public line, and transmits and receives the history information of unique numbers. When the communication section 410 also has the function of the communication section 430, the communication section 430 may be omitted.

Since the unique-number management server 400b has the same structure as the unique-number management server 400a, a description of the unique-number management server 400b will be omitted.

The unique-number data base 500 is formed of a communication section 510 for communicating with the unique-number management server 400a and 400b, a history-information management section 520 for managing history information, and a history-information storage section 530 for recording history information.

The communication section 510 is connected to the unique-number management servers 400a and 400b through communication lines, such as leased lines, including Ethernet, or public lines, and transmits and receives the history information of a unique number.

When the history-information management section 520 receives a request for history information from the unique-number management server 400a or 400b through the communication section 510, the history-information management section 520 reads history information related to a product from the history-information storage section 530, and sends it to the unique-number management server 400a or 400b through the communication section 510. When the history-information management section 520 receives a request for updating history information through the same path, if the history-information management section 520 has not been processing a request for updating history information, sent from another unique-number management server, the history-information management section 520 disables an access to the history information, performs a writing operation for the history information, enables an access to the history information after the writing operation has been finished, and sends a notice which indicates that update has been completed. If the history-information management section 520 has been processing a request for updating history information, that is, if an access to the history information is disabled, the history-information management section 520 sends a notice which denies the update.

The history-information storage section 530 stores history information related to unique numbers assigned to products.

The operation of the system used for optical-disk manufacturing, having the above structure, and a unique-number recording method will be described.

The unique-number recording apparatus 100a or 100b requests unique-number information from the unique-number management server 400a. A request is made at a certain timing determined in advance, such as for each lot or for each optical disk. The unique-number management server 400a receives the request for unique-number information at the communication section 410, and sends it to the unique-number generation section 420. The unique-number generation section 420 requests history information from the unique-number data base 500 through the communication section 430. The unique-number data base 500 receives the request for history information at the communication section 510, and sends it to the history-information management section 520. When the history-information storage section 530 is not locked, the history-information management section 520 reads the history information of the product concerned, and sends it through the communication section 510. The unique-number management server 400a receives the history information at the communication section 430, and sends it to the unique-number generation section 420. The unique-number generation section 420 searches for a number not used in the past from the history information, and determines a range of numbers which can be used, according to a rule determined in advance. When serial unique numbers are assigned in the order of requests, for example, the lowest unique number is assigned first among the unique numbers not yet used. Unique-number information is generated according to the determination and a history-information update is requested through the communication section 430. When the history-information management section 520 of the unique-number data base 500 receives the request for history-information update through the communication section 510, the history-information management section 520 checks the state of the history-information storage section 530. When the history-information storage section 530 is not locked, the history-information management section 520 locks the history-information storage section 530, updates the history information, and unlock the history-information storage section 530 when the update is finished. Then, the history-information management section 520 sends a notice indicating that the update has been completed to the unique-number management server 400a. When the history-information storage section 530 is locked, the history-information management section 520 denies the update, and sends a notice indicating that the update has been denied to the unique-number management server 400a. The unique-number generation section 420 of the unique-number management server 400a receives a response from the unique-number data base 500 through communication means 2 (430). When the response indicates that the update has been normally completed, the unique-number generation section 420 sends unique-number information to the unique-number recording apparatus 100a or 100b through the communication section 410. When the response indicates that the update has been denied, processes are again performed from the process for reading history information. The unique-number recording apparatus 100a or 100b records a unique number in the optical disk 300 according to the received unique-number information.

In the above description, when the unique-number data base 500 denies an update request, the unique-number management server 400a or 400b performs a retrial. It may be possible that the unique-number management server 400a or 400b sends a response indicating that unique-number acquisition is not allowed to the unique-number recording apparatus 100a or 100b, and the unique-number recording apparatus 100a or 100b performs a retrial.

As described above, since the unique-number data base 500 manages unique numbers, and the unique-number management servers 400a and 400b determine unique numbers to be recorded in the optical disks 300 according to history information owned by the unique-number data base 500, unique numbers do not overlap. In addition, when a request is made, the lowest unique number is assigned. Therefore, serial unique numbers can be assigned, which are to be recorded in products by the unique-number recording apparatuses 100a and 100b, which are under the control of the unique-number management server 400a, and by unique-number recording apparatuses which are under the control of the unique-number management server 400b.

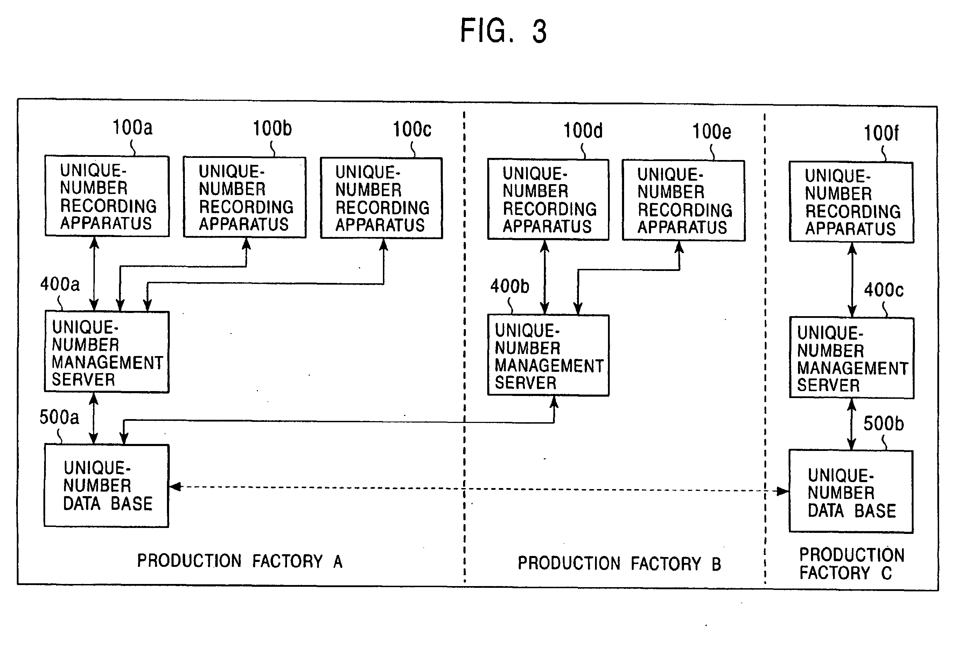

A system structure used when a plurality of unique-number recording apparatuses operate in a plurality of production factories will be described next. Fig. 3 is a structural view of a unique-number recording system which operates in a plurality of factories, according to an embodiment of the present invention. The same numbers as those used in Fig. 1 and Fig. 2 are assigned to the same portions as those shown in Fig. 1 and Fig. 2, and a description thereof will be omitted. In the present embodiment, the first embodiment described above and the second embodiment described above are mixed.

Unique-number recording apparatuses 100a, 100b, and 100c installed in a production factory A each receive unique numbers to be recorded in products from a unique-number management server 400a. The unique-number management server 400a calculates unique numbers given to the unique-number recording apparatuses 100a, 100b, and 100c according to the history information of unique numbers stored in a unique-number data base 500a. When the unique-number recording apparatus 100a, 100b, or 100c receives a unique number, the history information stored in the unique-number data base 500a is updated.

Unique-number recording apparatuses 100d and 100e installed in a production factory B each receive unique numbers to be recorded in products from a unique-number management server 400b. The unique-number management server 400b calculates unique numbers given to the unique-number recording apparatuses 100d and 100e according to the history information of unique numbers stored in the unique-number data base 500a. When the unique-number recording apparatus 100d or 100e receives a unique number, the history information stored in the unique-number data base 500a is updated.

As described above, since the unique-number recording apparatuses 100a, 100b, 100c, 100d, and 100e installed in the production factories A and B receive unique numbers determined according to the history information stored in the unique-number data base 500a, the unique numbers do not overlap. In addition, serial unique numbers can be given, for example, in the order of requests of unique-number grants, to the unique-number recording apparatuses 100a, 100b, 100c, 100d, and 100e.

A unique-number recording apparatuses 100f installed in a production factory C receives unique numbers to be recorded in products from a unique-number management server 400c. The unique-number management server 400c calculates unique numbers given to the unique-number recording apparatus 100f according to the history information of unique numbers stored in a unique-number data base 500b. When the unique-number recording apparatus 100f receives a unique number, the history information stored in the unique-number data base 500b is updated.

As described above, when different data bases are used in a plurality of production factories, the unique-number data base 500a and the unique-number data base 500b can be connected with a leased line or a public line to share mutual data, so that not-overlapping unique numbers are given to the unique-number recording apparatuses 100a, 100b, 100c, 100d, 100e, and 100f. When unique numbers are managed with the unique-number data base 500a and the unique-number data base 500b being not connected, a unique ID (numeral, symbol, or character) is given to each production factory, and, when a unique number is given to the unique-number recording apparatus 100a, for example, the unique-number management server 400a adds the corresponding ID to the unique number and passes the result, so that not-overlapping, unique numbers are assigned to disks manufactured in each production factory. An ID can be given to any group. It may be given to each factory, or to each unique-number data base.

Encryption may be applied to communications between the apparatuses described above.

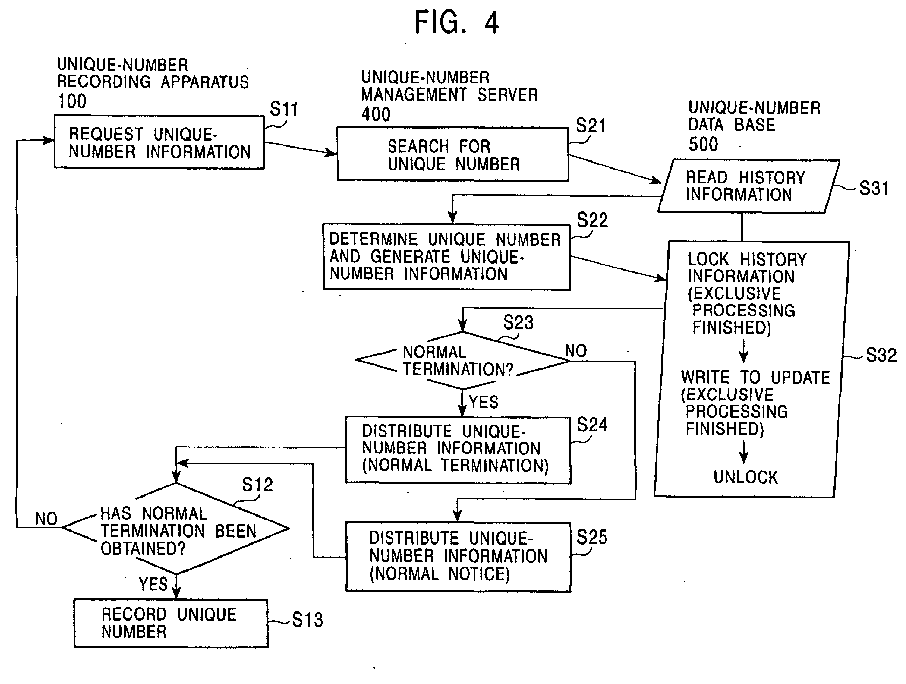

A unique-number recording method according to the present invention will be described next. Fig. 4 is a flowchart of a unique-number recording method according to an embodiment of the present invention. The method will be described for a system having a unique-number recording apparatus 100, a unique-number management server 400, and a unique-number data base 500.

In step S11, the unique-number recording apparatus requests unique-number information from the unique-number management server 400, for example, to determine which unique number should be assigned to a product when the product is manufactured. For example, the unique-number recording apparatus asks the unique-number management server to issue a unique number to be assigned to a product [TEST].

In step S21, when the unique-number management server 400 receives the request, it requests the history information of the product from the unique-number data base, and searches for a unique number. For example, the unique-number management server inquires of the unique-number data base which number has not yet been used as a number to be assigned to the product [TEST].

In step S31, when the unique-number data base 500 receives a request for the history information, it reads the history information indicating that which number was assigned to the product in the past, and sends it to the unique-number management server 400. For example, the unique-number data base 500 sends a list of unique numbers which have been used for the products [TEST].

In step S22, when the unique-number management server 400 receives the history information, it searches for a unique number which has not yet been used according to the history information, determines a range of unique numbers to be used by the unique-number recording apparatus 100 for production, and generates unique-number information. For example, the unique-number management server 400 finds that unique numbers 1000 and later have not yet been used as unique numbers assigned to the products [TEST], and determines to give unique numbers 1,000 to 1,100 to the unique-number recording apparatus 100. At this time, to update the history information of the unique-number management server 400 with the determined unique numbers, the data base is locked and exclusive processing is performed.

In step S32. the unique-number data base 500 locks the history information, starts the exclusive processing, update the history information by writing, finishes the exclusive processing, and releases (unlocks) the lock. For example, unique numbers 1,000 to 1,100 are added to the list of unique numbers which have been used for the products [TEST]. The exclusive processing may be performed by the unique-number management server 400.

In step S23, the unique-number management server 400 checks whether the history information has been normally updated. When it is determined that the update has been normally finished, the processing proceeds to step S24, and the unique-number management server 400 receives unique-number information for normal completion, that is, information related to the assigned unique numbers. For example, the unique-number management server 400 sends a notice indicating that unique numbers 1,000 to 1,100 are allowed to be assigned to the products [TEST]. In contrast, when it is determined that the update has failed, the unique-number management server 400 distributes in step S25 unique information indicating a failure notice. For example, the unique-number management server 400 sends a notice indicating that a unique number to be assigned to the product [TEST] cannot be issued.

In step S12, the unique-number recording apparatus 100 determines whether a normal-termination response has been obtained. When it is determined that a normal-termination response has not yet been obtained, the processing returns to step S11, and subsequent processes are repeated. When it is determined that a normal-termination response has been obtained, the processing proceeds to step S13, and the unique-number recording apparatus 100 records the unique numbers. For example, the unique-number recording apparatus 100 records unique numbers 1,000 to 1,100 in the product [TEST].

The above-described processing function can be implemented by a computer. In this case, the processing content of a function which the unique-number recording system should have is described by a program recorded in a computer-readable recording medium. When the program is executed by a computer, the above-described processing is implemented by the computer. The computer-readable recording media include a magnetic recording apparatus and a semiconductor memory. To make the program commercially available, the program is stored in portable recording media, such as CD-ROMs (compact disk read only memories) and floppy disks, and distributed, or the program is stored in a storage apparatus of a computer connected to a network and transferred to other computers through the network. To execute the program by a computer, the program is stored in a hard disk apparatus inside the computer, loaded to a main memory, and executed.

### Industrial Applicability

As described above, in the first unique-number recording system of the present invention, the unique-number management apparatus stores the history information in advance, and when the unique-number management apparatus receives a request for unique-number information, or as required, the unique-number management apparatus calculates a unique number to be assigned to a product according to the history information to generate the unique-number information, and sends it to a unique-number recording apparatus. In addition, in response to this operation, the history information is updated. The unique-number recording apparatus acquires the unique-number information, and records a predetermined unique number in the product according to the acquired unique-number information.

Since the unique-number management apparatus manages unique numbers, and generates a unique number to be assigned to a product in response to a request from a unique-number recording apparatus or as required, in this way, not-overlapping unique numbers can be assigned. In addition, since only the unique-number management apparatus manages unique numbers, consecutive and serial unique numbers can be assigned, for example, to products manufactured by a plurality of unique-number recording apparatuses.

Further, a unique-number management apparatus according to the present invention stores history information in advance. In response to a request from a unique-number recording apparatus, or as required, the unique-number management apparatus calculates a unique number to be assigned to a certain product according to the history information to generate unique-number information, sends it to the unique-number recording apparatus, and updates the history information.

Since the unique-number management apparatus manages unique numbers, and generates a unique number to be assigned to a certain product in this way, not-overlapping unique numbers can be assigned. In addition, since only the unique-number management apparatus manages unique numbers, consecutive and serial unique numbers can be assigned, for example, to products manufactured by a plurality of unique-number recording apparatuses.

In the second unique-number recording system of the present invention, the unique-number storage apparatus stores and manages the history information of unique numbers assigned to products. A unique-number recording apparatus requests unique-number information from the unique-number management apparatus as required. When the unique-number management apparatus receives the request, it acquires history information from the unique-number storage apparatus, calculates a unique number to be assigned to a product according to the acquired history information to generate unique-number information, and requests a history-information update from the unique-number storage apparatus. The unique-number management apparatus also sends the unique-number information to the unique-number recording apparatus. The unique-number storage apparatus updates the history information. The unique-number recording apparatus records the unique number in the product according to the unique-number information.

Since the unique-number storage apparatus manages the history information of unique numbers, and a unique-number management apparatus generates a unique number to be assigned to a product according to the history information in this way, not-overlapping unique numbers can be assigned to products. In addition, since only the unique-number storage apparatus manages unique numbers, consecutive and serial unique numbers can be assigned, for example, to products in which the unique numbers are recorded by unique-number recording apparatuses managed by a plurality of unique-number management apparatuses.

In a unique-number recording method according to the present invention, a unique-number management apparatus stores history information in advance. In response to a request from a unique-number recording apparatus, or as required, the unique-number management apparatus calculates a unique number to be assigned to a product according to the history information to generate unique-number information, and sends it to a unique-number recording apparatus. And then, the unique-number management apparatus updates the history information. The unique-number recording apparatus which has acquired the unique-number information records a predetermined unique number in the product according to the acquired unique-number information.

Since the unique-number management apparatus manages unique numbers, and generates a unique number to be assigned to a product in this way, not-overlapping unique numbers can be assigned to products. In addition, since only the unique-number management apparatus manages unique numbers, a plurality of unique-number recording apparatuses, for example, can assign consecutive and serial unique numbers to products.

## Claims

1. A unique-number recording system for recording unique numbers which make certain products identifiable, **characterized by** comprising:
a unique-number recording apparatus comprising communication means for transmitting and receiving unique-number information formed of the unique numbers and information related to the unique numbers, through a communication line; unique-number acquisition means for acquiring the unique-number information as required; and unique-number recording means for recording certain unique numbers in the products according to the unique-number information acquired by the unique-number acquisition means, and
a unique-number management apparatus comprising communication means for transmitting and receiving the unique-number information to and from the unique-number recording apparatus through the communication line; history-information storage means for storing history information related to unique numbers assigned to the products; and unique-number generation means for calculating unique numbers to be assigned to the products according to the history information to generate the unique-number information and for updating the history information, in response to a request from the unique-number recording apparatus or as required.

2. A unique-number recording system according to Claim 1, **characterized in that**
when the unique-number generation means receives a request for the unique-number information from the unique-number recording apparatus through the communication means,
the unique-number generation means calculates unique numbers which do not overlap with unique numbers already assigned and which has a certain continuity with the unique numbers already assigned according to the history information stored in the history-information storage means.

3. A unique-number recording system according to Claim 1, **characterized in that**
the certain products are optical disks.

4. A unique-number recording system for recording unique numbers which make certain products identifiable, **characterized by** comprising:
a unique-number recording apparatus comprising communication means for transmitting and receiving unique-number information formed of the unique numbers and information related to the unique numbers; unique-number acquisition means for acquiring the unique-number information as required; and unique-number recording means for recording certain unique numbers in the products according to the unique-number information acquired by the unique-number acquisition means;
a unique-number storage apparatus comprising history-information storage means for storing history information related to unique numbers assigned to the products; communication means for transmitting and receiving the history information; and history-information management means for managing information stored in the history-information storage means and for controlling transmission and receiving of the history information; and
a unique-number management apparatus comprising first communication means for transmitting and receiving the unique-number information to and from the unique-number recording apparatus; second communication means for transmitting and receiving the history information to and from the unique-number storage apparatus; and unique-number generation means for acquiring the history information from the unique-number storage apparatus, for calculating unique numbers to be assigned to the products according to the history information to generate the unique-number information, and for updating the history information, in response to a request from the unique-number recording apparatus or as required.

5. A unique-number recording system according to Claim 4, **characterized in that**
when the history-information management means accepts a request for updating the history information from any of the unique-number management apparatuses, the history-information management means denies, until the history information has been updated for the accepted request, a request for updating the history information from another one of the unique-number management apparatuses, and
the unique-number generation means of the unique-number management apparatus sends the unique-number information generated when the request for updating the history information was accepted, to the unique-number recording apparatus.

6. A unique-number recording system according to Claim 4, **characterized in that**
the unique-number recording system is formed of a plurality of the unique-number storage apparatuses, and
the history-information management means of each of the unique-number storage apparatuses shares information such that the history information stored in each history-information storage means is the same as in another one of the unique-number storage apparatuses constituting the unique-number recording system.

7. A unique-number recording system according to Claim 4, **characterized in that**
the unique-number recording system is formed of a plurality of the unique-number storage apparatuses not connected, and
when generating the unique-number information, the unique-number generation section of the unique-number management apparatus adds identification information determined for each certain unit in order to allow the unique-number storage apparatuses not connected to be differentiated.

8. A unique-number management apparatus for managing unique numbers which make certain products identifiable, **characterized by** comprising:
communication means for transmitting and receiving unique-number information formed of the unique numbers and information related to the unique numbers to and from a unique-number recording apparatus for recording the unique numbers in the products, through a communication line;
history-information storage means for storing history information related to unique numbers assigned to the products; and
unique-number generation means for calculating unique numbers to be assigned to the products according to the history information to generate the unique-number information and for updating the history information, in response to a request from the unique-number recording apparatus or as required.

9. A unique-number recording method for recording, when certain products are manufactured, unique numbers which make the products identifiable, **characterized by** comprising:
a storage step in which a unique-number management apparatus for managing the unique numbers stores history information related to the unique numbers assigned to the products in advance;
a generation step of calculating unique numbers to be assigned to the products according to the history information to generate the unique-number information, in response to a request from a unique-number recording apparatus for recording the unique numbers in the products, or as required;
an update step of sending the unique-number information to the unique-number recording apparatus and of updating the history information; and
a recording step in which the unique-number recording apparatus acquires the unique-number information, and records certain unique numbers to the products according to the unique-number information.

10. A unique-number-recording control program for making a computer execute a procedure for recording, when certain products are manufactured, unique numbers which make the products identifiable, **characterized by** comprising:
a step of making a computer for managing the unique numbers execute a procedure for storing history information related to the unique numbers assigned to the products in advance, for calculating unique numbers to be assigned to the products according to the history information as required to generate the unique-number information, for sending the unique-number information to a computer for recording the unique numbers in the products, and for updating the history information, and
a step of making the computer for recording the unique numbers in the products execute a procedure for recording certain unique numbers in the products according to the unique-number information.
